(19) Europäisches Patentamt / European Patent Office / Office européen des brevets

(11) **EP 2 394 328 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
*H01M 10/44* *(2006.01)*   *H01M 10/46* *(2006.01)*
*H01M 10/42* *(2006.01)*   *H02J 7/00* *(2006.01)*

(21) Anmeldenummer: 09801684.3

(22) Anmeldetag: **14.12.2009**

(86) Internationale Anmeldenummer:
**PCT/EP2009/067077**

(87) Internationale Veröffentlichungsnummer:
**WO 2010/088998 (12.08.2010 Gazette 2010/32)**

(54) **TRAKTIONSBATTERIE MIT ERHÖHTER VERFÜGBARKEIT**

TRACTION BATTERY WITH INCREASED AVAILABILITY

BATTERIE DE TRACTION AVEC UNE MEILLEURE DISPONIBILITÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.02.2009 DE 102009000674**

(43) Veröffentlichungstag der Anmeldung:
**14.12.2011 Patentblatt 2011/50**

(73) Patentinhaber: **Robert Bosch GmbH**
**70442 Stuttgart (DE)**

(72) Erfinder: **FINK, Holger**
**70567 Stuttgart (DE)**

(56) Entgegenhaltungen:
JP-A- 2000 182 598   US-A- 5 773 962
US-A1- 2003 071 523   US-B1- 6 593 669

EP 2 394 328 B1

**Beschreibung**

Stand der Technik

Die vorliegende Erfindung betrifft eine Batterie, insbesondere ein Traktionsbatterie, gemäß dem Oberbegriff des Patentanspruches 1.

Es zeichnet sich ab, dass in Zukunft sowohl bei stationären Anwendungen (z.B. bei Windkraftanlagen) als auch in Fahrzeugen (z.B. in Hybrid- und Elektrofahrzeugen) vermehrt neue Batteriesysteme zum Einsatz kommen werden, an die sehr hohe Anforderungen bzgl. Zuverlässigkeit gestellt werden. Hintergrund für diese hohen Anforderungen ist, dass ein Ausfall der Batterie zu einem Ausfall des Gesamtsystems führen kann (z.B. führt bei einem Elektrofahrzeug ein Ausfall der Traktionsbatterie zu einem sogenannten "Liegenbleiber") oder sogar zu einem sicherheitsrelevanten Problem führen kann (bei Windkraftanlagen werden z.B. Batterien eingesetzt, um bei starkem Wind die Anlage durch eine Rotorblattverstellung vor unzulässigen Betriebszuständen zu schützen).

Darüber hinaus besteht bei Batteriesystemen in stationären Anwendungen häufig die Anforderung, dass auch während Wartungsarbeiten ein Betrieb des Batteriesystems - ggf. mit eingeschränkter Leistungsfähigkeit - ermöglicht sein muss, d.h. ein solches Batteriesystem muss ohne Unterbrechung ständig verfügbar sein.

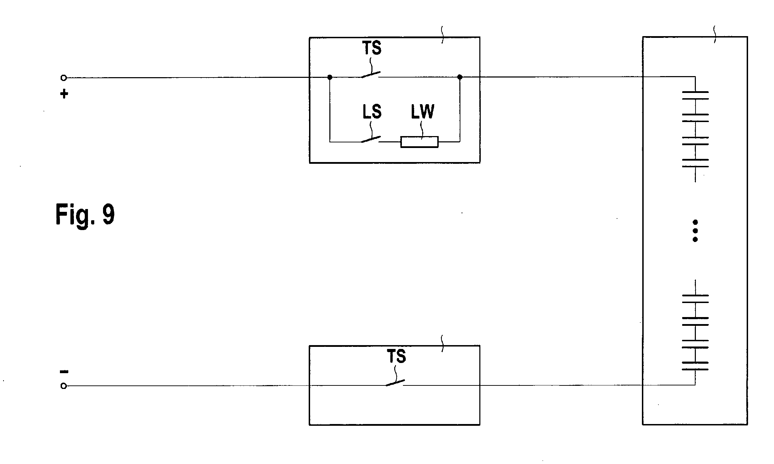

Das Prinzipschaltbild eines Batteriesystems gemäß heutigem Stand der Technik ist in Figur 9 dargestellt. Um die geforderten Leistungs- und Energiedaten mit dem Batteriesystem zu erzielen, werden einzelne Batteriezellen in Serie und teilweise zusätzlich parallel geschaltet. Neben den Batteriezellen weist das Batteriesystem noch eine sogenannte Lade- und Trenneinrichtung auf, die in Figur 9 ohne Beschränkung der Aligemeinheit zwischen dem Pluspol der Batterie und den Batteriezellen angeordnet ist. Mit dem Trennschalter TS kann die Batterie einpolig zu- bzw. abgeschaltet werden. Als optionale Funktionseinheit ist in Figur 9 noch eine weitere Trenneinrichtung dargestellt, mit der die Batterie - falls gefordert über einen zweiten Trennschalter- zweipolig abgeschaltet werden kann. In der Lade- und Trenneinrichtung befindet sich noch ein sogenannter Ladeschalter, mit dem ein Ladewiderstand zwischen die Batteriezellen und die extern angeschlossen Systeme geschaltet werden kann, um die Ausgleichsströme beim Zuschalten der Batterie zu begrenzen. Bei einem solchen Zuschaltvorgang wird in der Lade- und Trenneinrichtung bei geöffnetem Trennschalter zunächst der Ladeschalter geschlossen und zusätzlich - falls vorhanden - der Trennschalter in der optionalen Trenneinrichtung am Minuspol des Batteriesystems geschlossen. Über den Ladewiderstand werden dann die Eingangskapazitäten der extern angeschlossenen Systeme aufgeladen. Weicht die Spannung zwischen Plus- und Minuspol des Batteriesystems nur noch unwesentlich von der Summenspannung der Batteriezellen ab, wird der Aufladevorgang durch Schließen des Trennschalters in der Lade- und Trenneinrichtung abgeschlossen. Das Batteriesystem ist dann niederohmig an die externen Systeme angeschlossen und kann mit seinen spezifizierten Leistungsdaten betrieben werden. Mit der geschilderten Vorgehensweise können die Ausgleichströme, die beim Zuschaltvorgang des Batteriesystems zwischen den externen Systemen und dem Batteriesystem auftreten, auf zulässige Werte begrenzt werden.

Aus der D1 ist ein System bekannt, mit einer Vielzahl von separaten elektrischen Zellen, die aus einer Vielzahl von elektrochemischen Batterie-, Brennstoffzellen- oder Photovoltaik-Kombinationen zusammengesetzt sind. Die Zellen sind über elektrische Verbindungen miteinander gekoppelt. Weiterhin ist ein Verfahren offenbart, welches Strom einem elektronischen Schaltkreis unverzüglich zur Verfügung stellt.

Die Zuverlässigkeit des Batteriesystems wird durch Ausfallrate bzw. Versagensrate gekennzeichnet. Die Ausfallrate beschreibt die in einem betrachteten Zeitraum im Mittel zu erwartende Zahl von Ausfällen.

Die Ausfallrate einer Batterie mit einer Serienschaltung von Einzelzellen kann wie folgt ermittelt werden:

$$\text{Ausfallrate}_{\text{Traktionsbatterie}} \quad = \quad 1 - (1 - \text{Ausfallrate}_{\text{Zelle}})^{\text{Anzahl Zellen}} \qquad (1)$$

Für die Traktionsbatterie eines Elektrofahrzeugs mit einer Serienschaltung von 100 Zellen und einer Ausfallrate im betrachteten Zeitraum von 100ppm / Zelle ergibt sich damit z.B.:

$$\begin{aligned} \text{Ausfallrate}_{\text{Traktionsbatterie}} \quad &= \quad 1 - (1 - 100\text{ppm})^{100} \\ &= \quad 9,95\text{‰} \qquad\qquad\qquad (2) \end{aligned}$$

Bei sehr geringen Ausfallraten der einzelnen Batteriezellen (z.B. Ausfallrate$_{\text{Zelle}}$ < 1‰ im betrachteten Zeitraum) kann die Ausfallrate näherungsweise wie folgt berechnet werden (Abbruch der Potenzreihenentwicklung der Binomischen Reihe nach dem ersten Glied):

$$\text{Ausfallrate}_{\text{Traktionsbatterie}} \quad \approx \quad \text{Anzahl Zellen} \ * \ \text{Ausfallrate}_{\text{Zelle}} \qquad (3)$$

Damit ist die Ausfallrate der betrachteten Traktionsbatterie nahezu 100 Mal so hoch wie die Ausfallrate einer einzelnen Zelle. Die Ausfallrate der einzelnen Zellen muss also - bei geforderten Werten für die Ausfallrate des Batteriesystems - etwa um den Faktor 100 geringer sein. Wird für ein Batteriesystem mit 100 in Serie geschalteten Zellen im betrachteten Zeitraum eine Ausfallrate von 100ppm gefordert, müssen die Zellen in diesem Zeitraum eine Ausfallrate von 1 ppm aufweisen. Dies stellt eine extrem schwer zu erfüllende Anforderung dar.

Weiter führt der Ausfall einer Zelle zum Ausfall des gesamten Batteriesystems. Während der Reparaturarbeiten beim Austausch ausgefallener Zellen steht das Batteriesystem nicht zur Verfügung. Daher kann mit Batteriesystemen gemäß dem heutigen Stand kein Batteriesystem realisiert werden, an das hohe Ansprüche hinsichtlich der Verfügbarkeit gestellt werden.

Aufgabe der Erfindung ist es, die Zuverlässigkeit und Verfügbarkeit von Batteriesystemen gegenüber dem heutigen Stand der Technik zu erhöhen. Dabei soll der Ausfall einer Zelle bzw. auch mehrerer Zellen eines Batteriemoduls nicht zum vollständigen Ausfall des Batteriesystems führen. Das Batteriesystem soll dann noch mit eingeschränkter Leistungsfähigkeit zur Verfügung stehen können. Zusätzlich soll das Batteriesystem auch während der Reparaturarbeiten, die beim Austausch ausgefallener Zellen erforderlich sind, weiter mit eingeschränkter Leistungsfähigkeit betrieben werden können, damit die Verfügbarkeit des Batteriesystems erhöht wird.

Offenbarung der Erfindung

Die erfindungsgemäße Batterie mit den Merkmalen des Patentanspruchs 1 weist demgegenüber den Vorteil auf, dass das Batteriesystem gegenüber dem heutigen Stand der Technik intern um zusätzliche Funktionseinheiten erweitert wird. Dabei handelt es sich um

- Trenneinrichtungen und/oder
- Lade- und Trenneinrichtungen und/oder
- Überbrückungseinrichtungen,

die nachfolgend näher beschrieben werden. Auf Basis dieser Funktionseinheiten wurden erfindungsgemäß Batteriemodule aufgebaut, die bei Ausfall einer oder mehrerer Zellen überbrückt werden können. Besteht das Gesamtsystem aus mehreren solchen Batteriemodulen, können -je nach Anforderungen und Ausführung des Batteriesystems - ein oder auch mehrere der Batteriemodule überbrückt werden, falls im entsprechenden Modul eine oder mehrere Zellen ausgefallen sind. Das Batteriesystem weist dann zwar eine an seinen Klemmen eingeschränkte Leistungsfähigkeit gegenüber dem regulären Betrieb auf, bei geeigneter Auslegung des Batteriesystems kann aber ein Ausfall des Systems bzw. ein sicherheitskritischer Zustand des Systems vermieden werden. Darüber hinaus wird der Ausfall der Zellen bzw. des Moduls erkannt und es können Reparaturmaßnahmen eingeleitet werden. Dadurch wird die Zuverlässigkeit des Batteriesystems erhöht. Darüber hinaus wird der Ausfall der Zellen bzw. des Moduls erkannt und es können Reparaturmaßnahmen eingeleitet werden. Das Batteriesystem ist so ausgelegt, dass die Reparaturmaßnahmen ohne Unterbrechung des Betriebs durchgeführt werden können. Dadurch wird die Verfügbarkeit des Batteriesystems erhöht.

Die Unteransprüche zeigen bevorzugte Weiterbildungen der Erfindung.

Besonders bevorzugt umfasst die erfindungsgemäße Batterie eine Ladeeinrichtung, die zwischen den ersten Anschluss der Reihenschaltung von Batteriemodulen und den ersten Batteriepol geschaltet ist und/oder die zwischen den zweiten Anschluss der Reihenschaltung von Batteriemodulen und den zweiten Batteriepol geschaltet ist, wobei die Batterie lediglich erste Batteriemodule umfasst. In diesem Fall ist eine Begrenzung der Ausgleichsströme im Traktionsbordnetz bei einem Ausfall beliebiger Batteriemodule gewährleistet, wobei ausschließlich einfach aufgebaute erste Batteriemodule vorgesehen werden.

Die erfindungsgemäße Batterie umfasst alternativ bevorzugt lediglich zweite Batteriemodule. In diesem Fall ist eine Begrenzung der Ausgleichsströme im Traktionsbordnetz auch bei einem Ausfall beliebiger Batteriemodule gewährleistet, wobei keine separate Ladeeinrichtung vorgesehen zu werden braucht, da die zweiten Batteriemodule jeweils eine solche umfassen. Dadurch ist eine einfachere Montage der Batterie mit ausschließlich gleichen Modulen möglich.

Die erfindungsgemäße Batterie umfasst alternativ bevorzugt n Batteriemodule, wobei 2 zweite Batteriemodule und n-2 erste Batteriemodule vorgesehen sind. In diesem Fall ist eine Begrenzung der Ausgleichsströme im Traktionsbordnetz auch bei einem Ausfall eines zweiten Batteriemoduls gewährleistet, da in diesem Fall noch die Ladeeinrichtung des zweiten Batteriemoduls vorhanden ist und eingesetzt werden kann.

In der erfindungsgemäßen Batterie ist zusätzlich oder alternativ bevorzugt die Überbrückungseinrichtung derart ausgestaltet, dass sie einen Kurzschluss des ersten Batteriemodulpols und des zweiten Batteriemodulpols nur bewirken kann, wenn eine Unterbrechung der Verbindung der Reihenschaltung und/oder Parallelschaltung von Batteriezellen mit dem ersten Batteriemodulpol und eine Unterbrechung der Verbindung der Reihenschaltung und/oder Parallelschaltung von Batteriezellen mit dem zweiten Batteriemodulpol bewirkt sind.

Zeichnung

Nachfolgend wird ein Ausführungsbeispiel der Erfindung unter Bezugnahme auf die begleitende Zeichnung im Detail beschrieben. In der Zeichnung zeigen:

Figur 1    ein Prinzipschaltbild einer Batterie, vorzugsweise Traktionsbatterie, gemäß einer ersten bevorzugten Ausführungsform der Erfindung,

Figur 2    ein Prinzipschaltbild einer Batterie, vorzugsweise Traktionsbatterie, gemäß einer zweiten bevorzugten Ausführungsform der Erfindung,

Figur 3    ein Prinzipschaltbild einer Batterie, vorzugsweise Traktionsbatterie, gemäß einer dritten bevorzugten Ausführungsform der Erfindung,

Figur 4    ein Prinzipschaltbild eines ersten Batteriemoduls gemäß einer bevorzugten Ausführungsform der Erfindung,

Figur 5    ein Prinzipschaltbild eines zweiten Batteriemoduls gemäß einer bevorzugten Ausführungsform der Erfindung.

Figur 6    ein Prinzipschaltbild einer Trenneinrichtung gemäß einer bevorzugten Ausführungsform der Erfindung,

Figur 7    ein Prinzipschaltbild einer Lade- und Trenneinrichtung gemäß einer bevorzugten Ausführungsform der Erfindung,

Figur 8    ein Prinzipschaltbild einer Überbrückungseinrichtung gemäß einer bevorzugten Ausführungsform der Erfindung, und

Figur 9    ein Prinzipschaltbild einer Traktionsbatterie nach dem Stand der Technik.

Bevorzugte Ausführungsformen der Erfindung

Nachfolgend werden unter Bezugnahme auf die Figuren bevorzugte Ausführungsformen der Erfindung im Detail beschrieben.
Zunächst werden die Begriffe Zuverlässigkeit und Verfügbarkeit im hier verwendeten Sinn definiert (Definition gemäß Lauber/Göhner: Prozessautomatisierung 1, 3. Auflage, Springer-Verlag):

**Zuverlässigkeit** (Reliability) ist die Fähigkeit eines Systems, für eine vorgegebene Zeit korrekt zu arbeiten (auch Verlässlichkeit).
**Verfügbarkeit** (Availability) ist die Wahrscheinlichkeit, ein reparierbares System zu einem vorgegebenen Zeitpunkt in einem funktionsfähigen Zustand anzutreffen.

Eine hohe Verfügbarkeit kann somit durch

•   hohe Zuverlässigkeit des Systems
•   kurze Reparaturzeiten (falls das System in den Reparaturzeiten nicht in Betrieb ist) bzw. - falls möglich - durch Reparaturen ohne Unterbrechung des Betriebs

erreicht werden.
Die Verfügbarkeit von Batteriesystemen wird erfindungsgemäß gegenüber dem Stand der Technik erhöht, da der Ausfall einer einzelnen Batteriezelle nicht unmittelbar zum Ausfall des Batteriesystems führt, d.h., indem die Zuverlässigkeit des Systems erhöht wird, und zusätzlich ein Betrieb des Systems auch während der Durchführung von Reparaturarbeiten ermöglicht wird. Bei der vorliegenden Erfindung wird das Batteriesystem gegenüber dem heutigen Stand der Technik in Batteriemodulen, die eine Reihenschaltung von Batteriezellen aufweisen, vorzugsweise intern um zusätzliche Funktionseinheiten erweitert, die im Folgenden zunächst beschrieben werden:

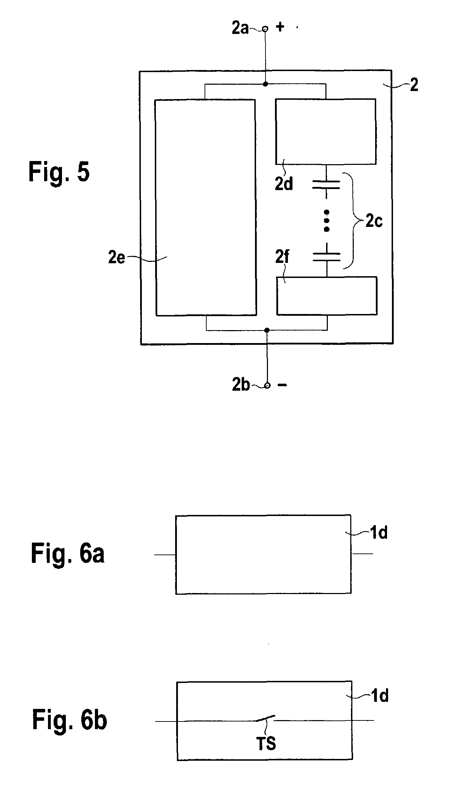

- Trenneinrichtungen 1d, wie in Figur 6a im Prinzip und in Figur 6b in einer Ausführungsform dargestellt:

    Eine Trenneinrichtung 1d dient dazu, die Batteriezellen 1c eines ersten Batteriemoduls 1 einpolig von einem der beiden Pole 1a, 1b des Batteriemoduls 1 abzuschalten bzw. die Batteriezellen 1c niederohmig an den entsprechenden Pol 1a, 1b anzubinden.
    Für eine zweipolige Abschaltung der Batteriezellen 1c von beiden Polen 1 a, 1b des Batteriemoduls 1 können in einem Batteriemodul 1 auch zwei Trenneinrichtungen 1d zum Einsatz kommen (sinnvoller Weise jeweils eine direkt am Pluspol und eine direkt am Minuspol des Batteriemoduls).
    Das Grundprinzip der vorliegenden Erfindung ist unabhängig von der konkreten Realisierung des Trennschalters TS in der Trenneinrichtung 1 d, für den u.a. die Realisierung als elektromechanischer Schalter (Relais oder Schütz), als elektronischer Schalter (Halbleiterschalter) oder eine Kombination aus elektromechanischem und elektronischem Schalter in Betracht kommen.

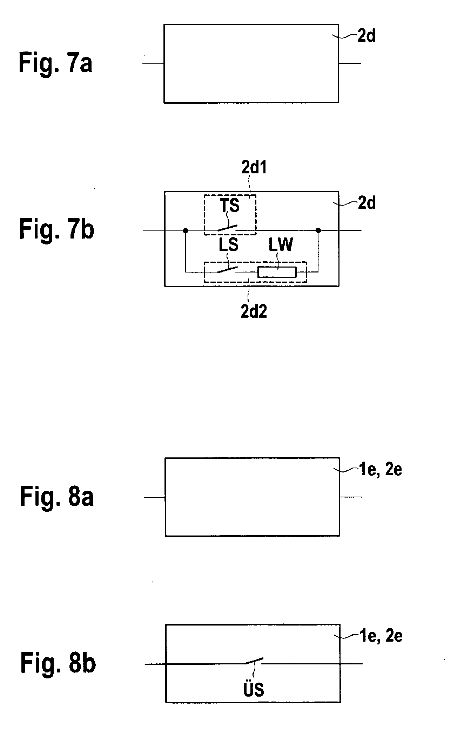

- Lade- und Trenneinrichtungen 2d, wie in Figur 7 a im Prinzip und in Figur 7b in einer Ausführungsform dargestellt:

    Eine Lade- und Trenneinrichtung 2d stellt die funktionale Erweiterung einer Trenneinrichtung 2d1, die wie die zuvor in Bezug auf die Figur 6 beschriebene Trenneinrichtung 1d funktioniert und den Zweck hat, um eine Ladeeinrichtung 2d2 dar, welche die beim Zuschalten des Batteriesystems bzw. eines Batteriemoduls auftretenden Lade- bzw. Ausgleichströme begrenzt. Ursache für diese Ströme sind die Eingangskapazitäten der externen Systeme, welche im Allgemeinen vor Zuschalten der Batterie nicht dieselbe Spannung aufweisen, wie die Summenspannung des Batteriesystems. Die Begrenzung der Lade- bzw. Ausgleichströme erfolgt im einfachsten Fall über einen Widerstand LW, welcher mit dem Ladeschalter LS in Serie geschaltet ist. Durch geeignete Wahl des Widerstandswertes können die Ausgleichströme auf zulässige Werte für das Batteriesystem und für die externen Systeme begrenzt werden. Weist die Spannung an den Polen des Batteriesystems bzw. an den Polen eines Batteriemoduls 2 mit Lade- und Trenneinrichtung 2d nahezu dieselbe Spannung auf, wie die Summenspannung der entsprechenden Batteriezellen 2c (d.h. der Spannungsabfall am Ladewiderstand ist gering), kann der Trennschalter TS in der Lade- und Trenneinrichtung 2d geschlossen werden.
    Der Zuschaltvorgang eines Batteriesystems bzw. eines Batteriemoduls läuft somit wie folgt ab. Zunächst wird bei geöffnetem Trennschalter TS der Ladeschalter LS des Lade- und Trennmoduls 2d geschlossen. Die externen Kapazitäten werden daraufhin auf- bzw. umgeladen, bis die Spannung an den Polen des Batteriesystems bzw. des Batteriemoduls in etwa der Summenspannung der zugeordneten Batteriezellen entspricht. Dann wird der Trennschalter TS geschlossen und der Ladevorgang abgeschlossen. Die Batteriezellen sind dann niederohmig mit den Polen des Batteriesystems bzw. des Batteriemoduls verbunden.
    Der Trennschalter TS und der Ladeschalter LS des Lade- und Trennmoduls 2d können auf die gleiche Weise konkret realisiert werden, wie der Trennschalter TS der Trenneinrichtung 1 d.

- Überbrückungseinrichtungen 1 e; 2e, wie in Figur 8a im Prinzip und in Figur 8b in einer Ausführungsform dargestellt:

    Eine Überbrückungseinrichtung 1e; 2e dient dazu, ein Batteriemodul 1, 2 niederohmig zu überbrücken, d.h. den Plus- und den Minuspol des Batteriemoduls 1, 2 niederohmig zu verbinden, falls in dem Batteriemodul 1, 2 eine oder mehrere Batteriezellen 1 c, 2c ausgefallen sind.
    Das Grundprinzip der vorliegenden Erfindung ist unabhängig von der konkreten Realisierung des Überbrückungsschalters ÜS in der Überbrückungseinrichtung, für den - wie bei dem Trennschalter beschrieben - u.a. die Realisierung als elektromechanischer Schalter (Relais oder Schütz), als elektronischer Schalter (Halbleiterschalter) oder eine Kombination aus elektromechanischem und elektronischem Schalter in Betracht kommen.

Auf Basis der beschriebenen Funktionseinheiten können Batteriemodule aufgebaut werden, die anschließend zu Batteriesystemen verschaltet werden. Abhängig von den Anforderungen an das System, kann der Einsatz folgender Topologien für die Batteriemodule sinnvoll sein:

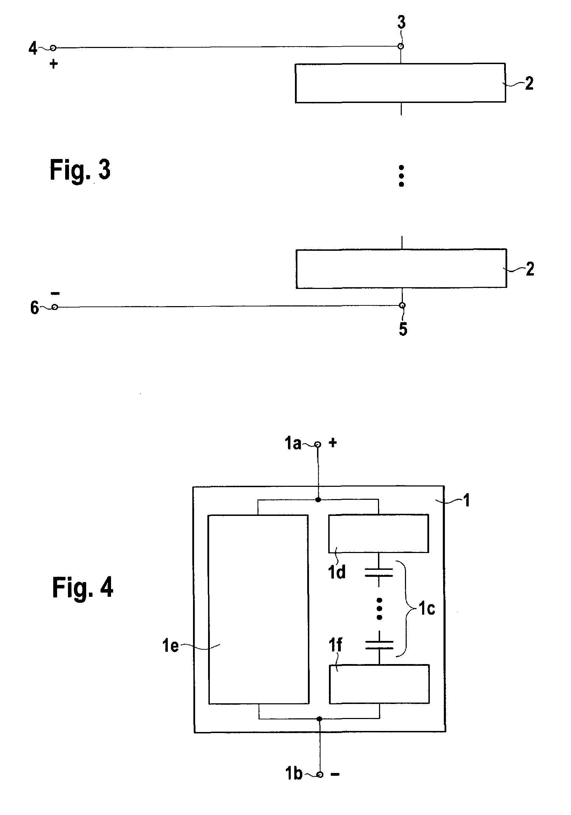

- Erstes Batteriemodul (Topologie 1) mit zwei Trenn- und einer Überbrückungseinrichtung, wie in Figur 4 dargestellt:

    Bei dieser Topologie werden zwei Trenneinrichtungen 1 d, 1f eingesetzt, um die Batteriezellen 1c zweipolig, d.h. von beiden Polen 1a, 1b des Batteriemoduls 1 abzuschalten bzw. die Batteriezellen 1c niederohmig an die beiden Pole 1 a, 1b anzubinden. Die parallel zu den Trenneinrichtungen 1d, 1f und den Batteriezellen 1c eingesetzte Überbrückungseinrichtung 1e dient zur niederohmigen Überbrückung des Batteriemoduls 1 bei dem Ausfall einer oder mehrerer Zellen 1c des Batteriemoduls 1. Der Überbrückungsschalter in der Überbrückungseinrichtung 1e wird vorzugsweise nur geschlossen, wenn mindestens einer der Trennschalter der beiden Trenneinrichtungen 1d, 1f geöffnet ist. Durch das Vorsehen von zwei Trenneinrichtungen 1d, 1f wird die Reparatur eines überbrückten Batteriemoduls (z.B. Austausch ausgefallener Zellen) ermöglicht, ohne dass Spannung an den Zellen anliegt. Dadurch wird die Verfügbarkeit des Systems erhöht, da das Batteriesystem während der Reparaturarbeiten weiter betrieben werden kann.

Die Trenneinrichtungen 1d, 1f und die Überbrückungseinrichtung 1e werden über Signalleitungen zur Steuerung und Diagnose der Funktionseinheiten des Batteriemoduls angesteuert, welche nicht gezeigt sind.

- Zweites Batteriemodul (Topologie 2) mit einer Lade-, zwei Trenn- und einer Überbrückungseinrichtung, wie in Figur 5 dargestellt.

Bei dieser Topologie wird gegenüber der Topologie 1 zusätzlich eine Ladeeinrichtung im zweiten Batteriemodul 2 eingesetzt, also eine in Figur 7 gezeigte Lade- und Trenneinrichtung 2d anstelle der Trenneinrichtung 1d, um die Lade- bzw. Ausgleichsströme beim Zuschalten des Batteriesystems zu begrenzen (sonstige Eigenschaften wie Topologie 1).

Die Lade- und Trenneinrichtung 2d, die Trenneinrichtung 2f und die Überbrückungseinrichtung 2e werden über Signalleitungen zur Steuerung und Diagnose der Funktionseinheiten des Batteriemoduls angesteuert, welche nicht gezeigt sind.

Mit den beschriebenen Batteriemodulen werden erfindungsgemäß modular Batteriesysteme aufgebaut, die gegenüber dem heutigen Stand der Technik eine erhöhte Zuverlässigkeit aufweisen. Als Beispiele für die Verschaltung der beschriebenen Batteriemodule sollen drei Batteriesysteme mit unterschiedlichen Topologien (bezeichnet mit Topologie A, B, C) betrachtet werden.

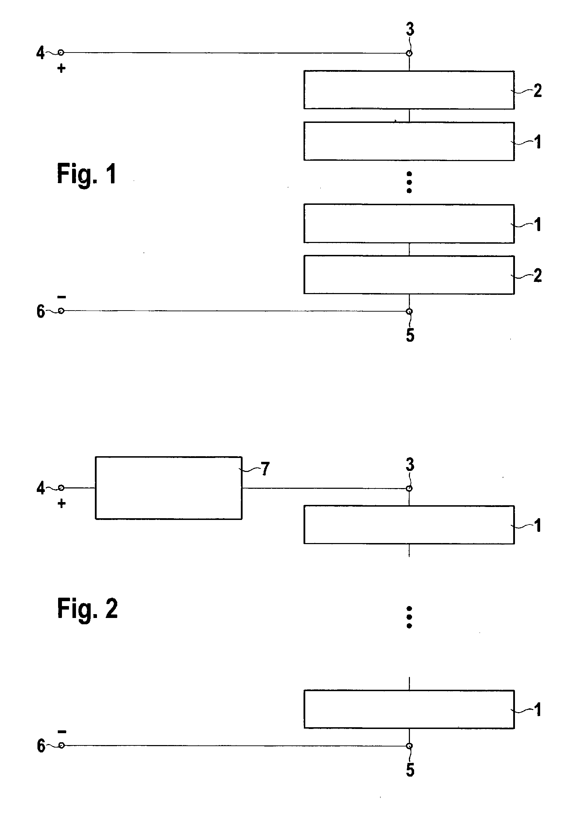

- Batteriesystem in Topologie A gemäß einer zweiten bevorzugten Ausführungsform der Erfindung, wie in Figur 2 dargestellt, mit

  ○ einer separaten Lade- und Trenneinrichtung 7,
  ○ mehreren in Serie geschalteten ersten Batteriemodulen 1 (Topologie 1). Vorteile:

    ○ Es werden einheitliche Batteriemodule eingesetzt.
    ○ Es wird insgesamt nur eine Ladeinrichtung eingesetzt, die beim Zuschalten des Batteriesystems aktiv wird.

- Batteriesystem in Topologie B gemäß einer dritten bevorzugten Ausführungsform der Erfindung, wie in Figur 3 dargestellt, mit

  ○ mehreren in Serie geschalteten zweiten Batteriemodulen 2 (Topologie 2). Vorteile:

    ○ Es werden einheitliche Batteriemodule eingesetzt.
    ○ Gegenüber Topologie A geringer Innenwiderstand, da eine Trenneinrichtung weniger in Serie geschaltet wird.

- Batteriesystem in Topologie C gemäß einer ersten bevorzugten Ausführungsform der Erfindung, wie in Figur 1 dargestellt, mit

  ○ zwei in Serie geschalteten zweiten Batteriemodulen 2 (Topologie 2),
  ○ ein bis mehreren in Serie geschalteten ersten Batteriemodulen 1 (Topologie 1). Vorteile:

    ○ Gegenüber Topologie A geringer Innenwiderstand, da eine Trenneinrichtung weniger in Serie geschaltet wird.
    ○ Gegenüber Topologie B geringerer Zusatzaufwand für die Ladeeinrichtungen, die nur in zwei Batteriemodulen vorhanden ist (Kosten, Bauraum). Es sind zwei Batteriemodule mit Ladeeinrichtung erforderlich, damit bei einem Fehler in einem dieser beiden Module nach Überbrückung noch eine Ladeeinrichtung für die Zuschaltung der Batterie an die externen Systeme vorhanden ist.

Für alle beschriebenen Batteriesysteme gilt:

Bei Ausfall einer oder mehrerer Zellen in einem Batteriemodul, kann das betroffene Modul nach Öffnen des Trennschalters in der bzw. den Trenneinrichtung(en) des Moduls durch Schließen des Überbrückungsschalters niederohmig kurzgeschlossen werden.

Abhängig von der Anzahl der Batteriemodule des Batteriesystems und der Anzahl der überbrückten Batteriemodule steht anschließend wieder ein Batteriesystem zur Verfügung, welches gegenüber dem regulären Betrieb mit allen Batteriemodulen folgende Daten aufweist.

| **Batteriesystem mit n Modulen** | Überbrückung 1 Modul | Überbrückung 2 Module | Überbrückung n-1 Module |
|---|---|---|---|
| Reduzierung der Leistung P auf | $\dfrac{n-1}{n} \cdot P_{Re\,gulär}$ | $\dfrac{n-2}{n} \cdot P_{Re\,gulär}$ | $\dfrac{1}{n} \cdot P_{Re\,gulär}$ |
| Reduzierung der Energie E auf | $\dfrac{n-1}{n} \cdot E_{Re\,gulär}$ | $\dfrac{n-2}{n} \cdot E_{Re\,gulär}$ | $\dfrac{1}{n} \cdot E_{Re\,gulär}$ |

Bei einem Batteriesystem mit 5 Batteriemodulen steht nach Überbrückung eines Batteriemoduls ein Batteriesystem zur Verfügung, das noch 80% der Leistung und 80% der Energie des kompletten Batteriesystems aufweist.

Neben der obigen schriftlichen Offenbarung wird hier ausdrücklich auf die Offenbarung in den Figuren verwiesen.

**Patentansprüche**

1.  Batterie, insbesondere Traktionsbatterie, mit wenigstens zwei in Reihe geschalteten Batteriemodulen (1, 2), die jeweils einen ersten Batteriemodulpol (1a 2a), einen zweiten Batteriemodulpol (1 b, 2b) und wenigstens eine dazwischen geschaltete Reihenschaltung und/oder Parallelschaltung von Batteriezellen (1c, 2c) umfassen, wobei ein erster Anschluss (3) der Reihenschaltung von Batteriemodulen (1, 2) mit einem ersten Batteriepol (4) verbunden ist und ein zweiter Anschluss (5) der Reihenschaltung von Batteriemodulen (1, 2) mit einem zweiten Batteriepol (6) verbunden ist, wobei

    wenigstens ein Batteriemodul der wenigstens zwei in Reihe geschalteten Batteriemodule (1, 2) ein erstes Batteriemodul (1) ist, das eine erste Trenneinrichtung (1d), eine zweite Trenneinrichtung (1f) und eine Überbrückungseinrichtung (1e) aufweist, wobei die erste Trenneinrichtung (1d) bei entsprechender Ansteuerung eine Unterbrechung der Verbindung der Reihenschaltung und/oder Parallelschaltung von Batteriezellen (1 c) mit dem ersten Batteriemodulpol (1a) und die zweite Trenneinrichtung (1 d) bei entsprechender Ansteuerung eine Unterbrechung der Verbindung der Reihenschaltung und/oder Parallelschaltung von Batteriezellen (1c) mit dem zweiten Batteriemodulpol (1 b) bewirken, und wobei über die Überbrückungseinrichtung (1d), die zwischen den ersten Batteriemodulpol (1a) und den zweiten Batteriemodulpol (1 b) geschaltet ist, bei entsprechender Ansteuerung der erste Batteriemodulpol (1 a) und der zweite Batteriemodulpol (1b) kurzgeschlossen werden, und/oder

    wenigstens ein Batteriemodul der wenigstens zwei in Reihe geschalteten Batterlemodule (1, 2) ein zweites Batteriemodul (2) ist, das wenigstens eine Lade- und Trenneinrichtung (2d), eine Trenneinrichtung (2f) und eine Überbrückungseinrichtung (2e) aufweist, wobei die wenigstens eine Lade- und Trenneinrichtung (2d) bei entsprechender Ansteuerung eine Unterbrechung der Verbindung der Reihenschaltung und/oder Parallelschaltung von Batteriezelle (2c) mit dem ersten Batteriemodulpol (2a) bewirkt und beim Zuschalten des Batteriemoduls (2) bzw. der Batterie mit dem Batteriemodul (2) auftretende Lade- bzw. Ausgleichsströme begrenzt, wobei die Trenneinrichtung (2f) bei entsprechender Ansteuerung eine Unterbrechung der Verbindung der Reihenschaltung und/oder Parallelschaltung von Batteriezellen (2c) mit dem zweiten Batteriemodulpol (2b) bewirkt, und wobei über die Überbrückungseinrichtung (2e), die zwischen den ersten Batteriemodulpol (2a) und den zweiten Batteriemodulpol (2b) geschaltet ist, bei entsprechender Ansteuerung der erste Batteriemodulpol (2a) und der zweite Batteriemodulpol (2b) kurzgeschlossen werden,

    **dadurch gekennzeichnet, dass** die Batterie lediglich zweite Batteriemodule (2) umfasst oder die Batterie lediglich erste Batteriemodule (1) und eine Ladeeinrichtung (7), die zwischen den ersten Anschluss (3) der Reihenschaltung von Batteriemodulen (1, 2) und den ersten Batteriepol (4) geschaltet ist und/oder die zwischen den zweiten Anschluss (5) der Reihenschaltung von Batteriemodulen (1, 2) und den zweiten Batteriepol (6) geschaltet ist, umfasst, oder die Batterie n Batteriemodule (1, 2) umfasst, wobei 2 zweite Batteriemodule (2) und n-2 erste Batteriemodule (1) vorgesehen sind.

2.  Batterie nach einem der vorstehenden Ansprüche, **dadurch gekennzeichnet, dass** die Überbrückungseinrichtung (1e, 2e) derart ausgestaltet ist, dass sie einen Kurzschluss des ersten Batteriemodulpols (1a) und des zweiten Batteriemodulpols (1b) nur bewirken kann, wenn eine Unterbrechung der Verbindung der Reihenschaltung und/ oder Parallelschaltung von Batteriezellen (1 c, 2c) mit dem ersten Batteriemodulpol (1 a) und eine Unterbrechung der Verbindung der Reihenschaltung und/oder Parallelschaltung von Batteriezellen (1c) mit dem zweiten Batteriemodulpol (1b) bewirkt sind.

## Claims

1. Battery, in particular a traction battery, having at least two battery modules (1, 2) which are connected in series and which each comprise a first battery module pole (1a, 2a), a second battery module pole (1b, 2b) and at least one series circuit and/or parallel circuit of battery cells (1c, 2c) which are/is connected between the said battery module poles, wherein a first connection (3) of the series circuit of battery modules (1, 2) is connected to a first battery pole (4) and a second connection (5) of the series circuit of battery modules (1, 2) is connected to a second battery pole (6), wherein

at least one battery module of the at least two battery modules (1, 2) which are connected in series is a first battery module (1) which has a first disconnection device (1d), a second disconnection device (1f) and a bridging device (1e), wherein the first disconnection device (1d) causes an interruption in the connection between the series circuit and/or the parallel circuit of battery cells (1c) and the first battery module pole (1a) given appropriate actuation and the second disconnection device (1f) causes an interruption in the connection between the series circuit and/or parallel circuit of battery cells (1c) and the second battery module pole (1b) given appropriate actuation, and wherein the first battery module pole (1a) and the second battery module pole (1b) are short-circuited by means of the bridging device (1e), which is connected between the first battery module pole (1a) and the second battery module pole (1b), given appropriate actuation, and/or

at least one battery module of the at least two battery modules (1, 2) which are connected in series is a second battery module (2) which has at least a charging and disconnection device (2d), a disconnection device (2f) and a bridging device (2e), wherein the at least one charging and disconnection device (2d) causes an interruption in the connection between the series circuit and/or parallel circuit of battery cells (2c) and the first battery module pole (2a) given appropriate actuation, and limits charging and/or compensation currents which occur when the battery module (2) or the battery comprising the battery module (2) is connected, wherein the disconnection device (2f) causes an interruption in the connection between the series circuit and/or parallel circuit of battery cells (2c) and the second battery module pole (2b) given appropriate actuation, and wherein the first battery module pole (2a) and the second battery module pole (2b) are short-circuited by means of the bridging device (2e), which is connected between the first battery module pole (2a) and the second battery module pole (2b), given appropriate actuation, **characterized in that** the battery comprises only second battery modules (2) or the battery comprises only first battery modules (1) and a charging device (7) which is connected between the first connection (3) of the series circuit of battery modules (1, 2) and the first battery pole (4) and/or which is connected between the second connection (5) of the series circuit of battery modules (1, 2) and the second battery pole (6), or the battery comprises n battery modules (1, 2), wherein two second battery modules (2) and n-2 first battery modules (1) are provided.

2. Battery according to Claim 1, **characterized in that** the bridging device (1e, 2e) is designed in such a way that it can cause a short circuit of the first battery module pole (1a) and of the second battery module pole (1b) only when there is an interruption in the connection between the series circuit and/or parallel circuit of battery cells (1c, 2c) and the first battery module pole (1a) and an interruption in the connection between the series circuit and/or parallel circuit of battery cells (1c) and the second battery module pole (1b).

## Revendications

1. Batterie, notamment batterie de traction, présentant au moins deux modules de batterie (1, 2) raccordés en série qui comprennent chacun un premier pôle (1a, 2a) de module de batterie, un deuxième pôle (1b, 2b) de module de batterie et au moins un circuit série et/ou un circuit parallèle de cellules (1c, 2c) de batterie intercalé entre les pôles, une première borne de raccordement (3) du circuit série de modules (1, 2) de batterie étant raccordée à un premier pôle (4) de batterie et une deuxième borne de raccordement (5) du circuit série de modules (1, 2) de batterie étant raccordée à un deuxième pôle (6) de batterie,

au moins l'un des deux ou plusieurs modules (1, 2) de batterie raccordés en série étant un premier module (1) de batterie qui présente un premier dispositif de séparation (1d), un deuxième dispositif de séparation (1f) et un dispositif de pontage (1e), le premier dispositif de séparation (1d) ayant pour effet lors d'une commande appropriée une interruption de la liaison entre le circuit série et/ou le circuit parallèle de cellules (1c) de batterie avec le premier pôle (1a) de module de batterie et le deuxième dispositif de séparation (1f) ayant pour effet lors d'une commande appropriée une interruption de la liaison entre le circuit série et/ou le circuit parallèle des cellules (1c) de batterie avec le deuxième pôle (1b) de module de batterie, et le dispositif de pontage (1e) raccordé entre le premier pôle (1a) de module de batterie et le deuxième pôle (1b) de module de batterie ayant pour effet lors d'une commande appropriée la mise en court-circuit du premier pôle (1a) de module de batterie et du deuxième pôle (1b) de module de batterie, et/ou

au moins l'un des deux ou plusieurs modules (1, 2) de batterie raccordés en série étant un deuxième module (2) de batterie qui présente au moins un dispositif de charge et de séparation (2d), un dispositif de séparation (2f) et un dispositif de pontage (2e), le ou les dispositifs de charge et de séparation (2d) ayant pour effet lors d'une commande appropriée une interruption de la liaison entre le circuit série et/ou le circuit parallèle de cellules (2c) de batterie avec le premier pôle (2a) de module de batterie et limitant les courants de charge et de compensation qui surviennent lors du branchement du module (2) de batterie ou de la batterie qui présente le module (2) de batterie, le dispositif de séparation (2f) ayant pour effet lors d'une commande appropriée une interruption de la liaison entre le circuit série et/ou le circuit parallèle de cellules (2c) de batterie avec le deuxième pôle (2b) de module de batterie, et le dispositif de pontage (2e) raccordé entre le premier pôle (2a) de module de batterie et le deuxième pôle (2b) de module de batterie ayant pour effet lors d'une commande appropriée la mise en court-circuit du premier pôle (2a) de module de batterie et du deuxième pôle (2b) de module de batterie,
**caractérisée en ce que**
la batterie comporte uniquement des deuxièmes modules (2) de batterie et/ou la batterie comprend uniquement des premiers modules (1) de batterie et un dispositif de charge (7) raccordé entre la première borne de raccordement (3) du circuit série de modules (1, 2) de batterie et le premier pôle (4) de batterie et/ou raccordé entre la deuxième borne de raccordement (5) du circuit série de modules (1, 2) de batterie et le deuxième pôle (6) de batterie, ou la batterie comporte n modules (1, 2) de batterie, deux deuxièmes modules (2) de batterie et n-2 premiers modules (1) de batterie étant prévus.

2. Batterie selon la revendication 1, **caractérisée en ce que** le dispositif de pontage (1e, 2e) est configuré de telle sorte qu'il n'a pour effet un court-circuit du premier pôle (1a) de module de batterie et du deuxième pôle (1b) de module de batterie que si une interruption de la liaison du circuit série et/ou du circuit parallèle de cellules (1c, 2c) de batterie avec le premier pôle (1a) de module de batterie et une interruption de liaison entre le circuit série et/ou le circuit parallèle de cellules (1c) de batterie avec le deuxième pôle (1b) de module de batterie sont réalisées.

**Fig. 1**

**Fig. 2**

Fig. 3

Fig. 4

Fig. 5

2a —o +

2

2d

2c

2e

2f

2b —o −

Fig. 6a

1d

Fig. 6b

1d

TS

**Fig. 7a**

2d

**Fig. 7b**

2d1

TS

2d

LS        LW

2d2

**Fig. 8a**

1e, 2e

**Fig. 8b**

1e, 2e

ÜS

Fig. 9